# EUROPEAN PATENT APPLICATION

(11) **EP 1 160 288 A1**
(43) Date of publication of application: **05.12.2001**
(21) Application number: 01304033.2
(22) Date of filing: 02.05.2001
(51) Int. Cl.: C08L 83/04, C08K 5/14, C08F 4/36

(54) **Silicone rubber composition for extrusion molding and method for fabricating silicone rubber extrusion moldings**

(30) Priority: 31.05.2000 JP 2000162975
(71) Applicant: Dow Corning Toray Silicone Co., Ltd., Tokyo (JP)
(72) Inventor: Hirai, Kazuo, Dow Corning Toray Silicone Co., Ltd., Ichihara-shi, Chiba Prefecture (JP); Baba, Katsuya Dow Corning Toray Silicone Co., Ltd., Ichihara-shi, Chiba Prefecture (JP); Honma, Hiroshi Dow Corning Toray Silicone Co.,Ltd., Ichihara-shi, Chiba Prefecture (JP)
(74) Representative: Kyle, Diana

(57) **Abstract**

A silicone rubber composition for extrusion molding applications having a high cure rate and providing silicone rubber extrusion moldings that post-cure and are either free of bubbles or contain bubbles to limited extent. The silicone rubber composition includes (A) 100 weight parts of a silicone rubber base compound containing (a-1) a diorganopolysiloxane gum, (a-2) reinforcing silica, and (a-3)a silanol-endblocked organosiloxane oligomer or hexaorganodisilazane; and (B) 0.1 to 10 weight parts of an organoperoxide with the formula R - COOOCOO - R¹ - OOCOOOC - R where R is an alkyl group, an alkoxy group, the group -SiR²₃, the group -CH₂SiR²₃, or the group -Ph-R³_{c} where R² is an alkyl or alkoxy group, Ph is phenylene, R³ is an alkyl group, an alkoxy group, the group -SiR²₃, or the group -CH₂SiR²₃; **c** is 0 to 3, and R¹ is a C₁ to C₁₀ alkylene group.

## Description

This invention is directed to a silicone rubber composition for extrusion molding applications, referred to hereafter as extrusion-grade silicone rubber composition, and method for fabricating silicone rubber extrusion moldings.

More particularly, the invention relates to silicone rubber compositions that can be used to produce such extrusion moldings as tubes, sheet, coatings for electric wire and cable, and architectural and construction gaskets. The invention further relates to a method of fabricating silicone rubber extrusion moldings.

Silicone rubbers have excellent resistance to heat, cold, and weathering, and have excellent electrical properties. Therefore, they are widely used as extrusion moldings for tubes, tapes, sheet, coatings for electric wire and cable, and architectural and construction gaskets. Chlorinated benzoyl peroxides such as 2,4-dichorobenzoyl peroxide and chlorobenzoyl peroxide, have been used as curing agents for curing silicone rubber compositions used to fabricate these extrusion molded articles.

However, silicone rubber compositions containing such chlorinated benzoyl peroxides evolve an unpleasant odor during cure, and provide silicone rubber moldings that suffer post-cure from blooming on the molding surface. As used herein, blooming refers to a whitening of the molding surface due to gradual precipitation at the molding surface of degradation products from the curing agent.

As a consequence, Japanese Laid Open (Kokai or Unexamined) Patent Application Number Sho 59-18758 (18,758/1984) teaches a silicone rubber composition in which bis(ortho-methylbenzoyl)peroxide is blended as curing agent, while Japanese Laid Open (Kokai or Unexamined) Patent Application Number Sho 62-185750 (185,750/1987)/US 4743671 (May 10, 1988) teaches a silicone rubber composition in which bis(para-methylbenzoyl)peroxide is blended as curing agent. These silicone rubber compositions, however, still possess disadvantages that can render them unusable depending on application. Thus, they exhibit a slow cure rate, and suffer from a strong tendency for bubbles to be produced within moldings, with the result that the moldings themselves suffer from reduced electrical insulation performance, reduced compression set, and defective appearance.

The present invention is a solution to such problems by the use of a special class of organoperoxide to cure silicone rubber base compounds and the result is a high cure rate and silicone rubber extrusion moldings that are either free of bubbles or contain bubbles to a very limited extent.

More particularly, it is an object of the invention to provide an extrusion-grade silicone rubber composition that has a high cure rate, and that provides silicone rubber extrusion moldings that post-cure and that are either free of bubbles or contain bubbles to an extremely limited extent. An additional object is to provide a method of fabricating silicone rubber extrusion moldings.

These and other features of the invention will become apparent from a consideration of the detailed description.

The invention relates to an extrusion-grade silicone rubber composition containing:
(A) 100 weight parts of a silicone rubber base compound that contains:
   (a-1) 100 weight parts of a diorganopolysiloxane gum,
   (a-2) 15 to 150 weight parts of reinforcing silica, and
   (a-3) 1 to 20 weight parts of a silanol-endblocked organosiloxane oligomer or hexaorganodisilazane, and
(B) 0.1 to 10 weight parts of an organoperoxide of the formula

   R - COOOCOO - R¹ - OOCOOOC - R

   where R is an alkyl group, an alkoxy group, the group -SiR²₃, the group -CH₂SiR²₃, or the group -Ph-R³_{c} in which R² is an alkyl group or an alkoxy group, Ph is phenylene, R³ is an alkyl group, an alkoxy group, the group -SiR²₃, or the group -CH₂SiR²₃, c is 0 to 3, and R¹ is a C₁ to C₁₀ alkylene group.

The invention also relates to a method of fabricating silicone rubber extrusion moldings. It is characterized by introducing the extrusion-grade silicone rubber composition into an extrusion mold, forming an uncured silicone rubber molding, and then forming a silicone rubber molding by curing the uncured silicone rubber molding at an ambient pressure in a hot gas of 200 to 600 °C.

Component (A) forms the base of the composition. The diorganopolysiloxane gum (a-1) of component (A) has a viscosity at 25 °C of at least 1,000,000 mPa·s, preferably at least 5,000,000 mPa·s. In addition, the Williams plasticity of component (a-1) should be at least 50, preferably at least 100, and more preferably at least 120. Component (a-1) should have a degree of polymerization (DP) of 3,000 to 20,000, and a weight-average molecular weight of at least 20 x 10⁴. Component (a-1) is exemplified by diorganopolysiloxane gums with the average unit formula RₐSiO_{(4-a)/2} in which **a** is 1.8 to 2.3, and R is a monovalent hydrocarbyl or halogenated alkyl group. The monovalent hydrocarbyl group R can be an alkyl group such as methyl, ethyl, and propyl; an alkenyl group such as vinyl and allyl; a cycloalkyl group such as cyclohexyl; an aralkyl group such as β-phenylethyl; or an aryl group such as phenyl and tolyl. The halogenated alkyl group R can be 3,3,3-trifluoropropyl or 3-chloropropyl. At least 50 mole percent of the R groups should be methyl. In addition, a silicon-bonded alkenyl group should be present in the molecule to provide good curing characteristics. The alkenyl group can be a vinyl, allyl, propenyl, or hexenyl group but it is preferably a vinyl group. The vinyl group should constitute 0.01 to 0.4 mole percent of the total organic groups present in the molecule.

The molecular structure of component (a-1) can be a straight chain or a branch-containing straight chains. Component (a-1) may be a homopolymer, copolymer, or mixture of such polymers. The siloxane unit or units of this component can be exemplified by units such as dimethylsiloxane, methylvinylsiloxane, methylphenylsiloxane, and (3,3,3-trifluoropropyl)methylsiloxane units. The group or groups present in the molecular chain terminal positions can be trimethylsiloxy, dimethylvinylsiloxy, methylvinylhydroxysiloxy, or dimethylhydroxysiloxy groups. This diorganopolysiloxane gum can be a trimethylsiloxy-endblocked methylvinylpolysiloxane gum, a trimethylsiloxy-endblocked dimethylsiloxane-methylvinylsiloxane copolymer gum, a dimethylvinylsiloxy-endblocked dimethylpolysiloxane gum, a dimethylvinylsiloxy-endblocked dimethylsiloxane-methylvinylsiloxane copolymer gum, a dimethylhydroxysiloxy-endblocked dimethylsiloxane-methylvinylsiloxane copolymer gum, a methylvinylhydroxysiloxy-endblocked dimethylsiloxane-methylvinylsiloxanemethylphenylsiloxane copolymer gum, or a methylvinylhydroxysiloxy-endblocked dimethylsiloxane-methylvinylsiloxane-(3,3,3-trifluoropropyl)methylsiloxane copolymer gum.

Reinforcing silica (a-2) is an essential component, and it provides the composition with an ability to maintain its extruded shape, and imparts mechanical strength to the cured silicone rubber. The reinforcing silica can be a dry-process silica such as fumed silica, or a wet-process silica such as precipitated silica. It can be used as such or after surface hydrophobing with an organosilicon compound such as an organochlorosilane, hexaorganodisilazane, or a diorganocyclosiloxane oligomer. Component (a-2) should have a BET specific surface area of at least 50 m²/g. Component (a-2) should be used in the range of 15 to 150 weight parts per 100 weight parts of the component (a-1). The use of less than 15 weight parts results in a reduced mechanical strength, and in a reduced ability to maintain an extruded shape. On the other hand, it would be difficult to blend more than about 150 weight parts into component (a-1).

Component (a-3) is a silanol-endblocked organosiloxane oligomer or an hexaorganodisilazane. It functions as a surface treatment agent for reinforcing silica (a-2), and facilitates uniform dispersion of component (a-2) in component (a-1). Component (a-3) additionally inhibits crepe hardening of component (A). The silanol-endblocked diorganosiloxane oligomer can be a silanol-endblocked dimethylsiloxane oligomer, a silanol-endblocked methylvinylsiloxane oligomer, a silanol-endblocked dimethylsiloxane-methylvinylsiloxane oligomer, a silanol-endblocked dimethylsiloxane-methylvinylsiloxane-methylphenylsiloxane oligomer, or a silanol-endblocked dimethylsiloxane-methylphenylsiloxane oligomer. The hexaorganodisilazanes can be hexamethyldisilazane or divinyltetramethyldisilazane. Component (a-3) should be used at 0.5 to 20 weight parts per 100 weight parts of component (a-1), preferably 1.0 to 10 weight parts per 100 weight parts component (a-1). Water should be added when hexaorganodisilazane is used as Component (a-3).

Component (A) is prepared by mixing components (a-1), (a-2), and (a-3) at 150 to 220 °C.

Organoperoxide (B) is the curing agent for the composition. It has the formula

R - COOOCOO - R¹ - OOCOOOC - R

in which R¹ is a C₁ to C₁₀ alkylene group, R is an alkyl group, an alkoxy group, the group -SiR²₃, the group -CH₂SiR²₃, or the group -Ph-R³_{c} where R² is an alkyl or alkoxy group, Ph is phenylene, R³ is an alkyl group, an alkoxy group, the group -SiR²₃, or the group -CH₂SiR²₃, and **c** is 0 to 3. Alkyl groups suitable for R are methyl, ethyl, or propyl. Alkoxy groups suitable for R are methoxy, ethoxy, or propoxy groups. Alkyl groups suitable for R² are methyl, ethyl, or propyl, and alkoxy groups suitable for R² are methoxy, ethoxy, or propoxy.

Component (B) can also have a structure as shown below in which R and R¹ are the same as defined above.

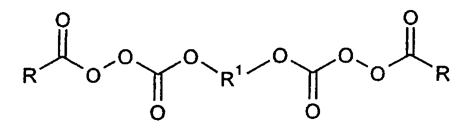

Organoperoxide (B) is exemplified by compounds such as:

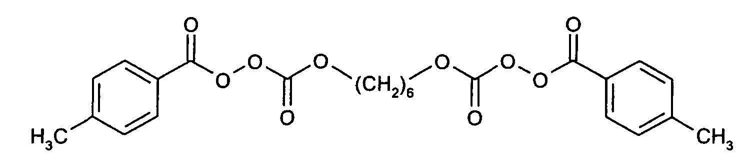

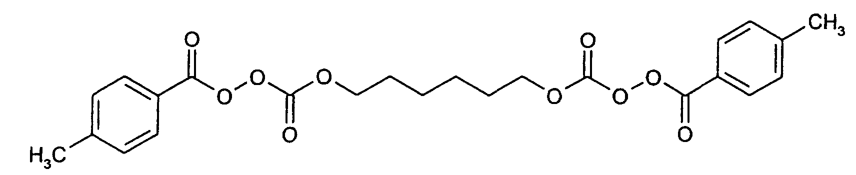

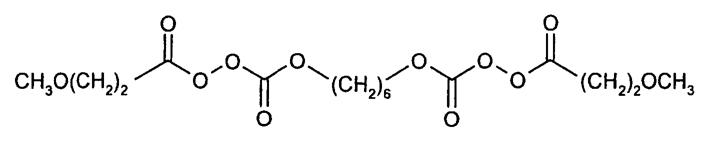

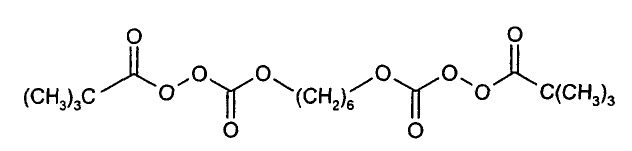

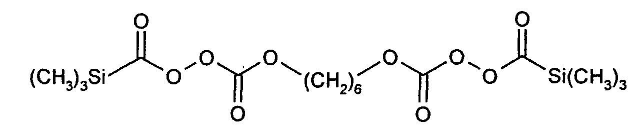

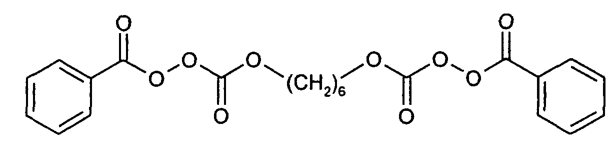

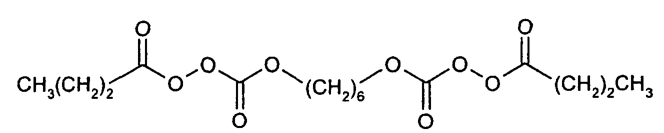

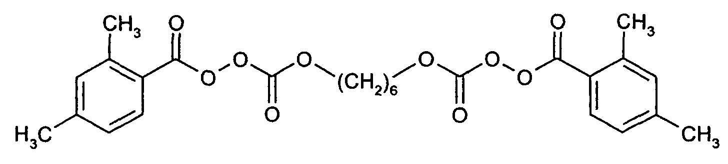

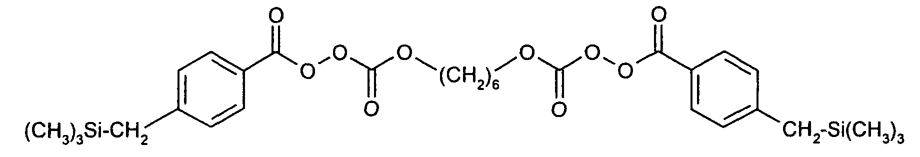

Component (B) should have a maximum particle size no greater than 50 µm. However, admixture of component (B) into the silicone rubber base compound can be carried out with component (B) in a paste form dispersed in a dimethylpolysiloxane oil.

While the essential components of the composition are components (A) and (B), it can contain other additives typically added to silicone rubber compositions provided the additives do not impair its function. These additives include inorganic fillers such as calcium carbonate, carbon black, aluminum hydroxide, and alumina; heat stabilizers such as cerium hydroxide, cerium silanolate, and cerium salts of aliphatic acids; mold-release agents such as higher fatty acids and their salts such as stearic acid, zinc stearate, and calcium stearate; and flame retardants such as pigments, platinum compounds, fumed titanium dioxide, and zinc carbonate.

The composition is prepared by intermixing components (A) and (B) to homogeneity. Components (A) and (B) can be intermixed using devices typically used for preparing silicone rubbers such as a two-roll mill.

The composition of components (A) and (B) should have a T₁₀ value no greater than 0.25 minute, and a T₉₀ value no greater than 1.0 minute. T₁₀ is the time required for the torque, measured at 130 °C/10 minutes using a JSR Model III Curastometer to reach 10 percent of the maximum torque. T₉₀ is the time required for the torque, again measured at 130 °C/10 minutes using a JSR Modell III Curastometer to reach 90 percent of the maximum torque. The JIS Model III Curastometer is a vulcanization testing instrument for determining vulcanization rates of standard rubber, and for measuring vulcanization rates of standard rubber according to the specifications of the Society of the Japanese Rubber Industry Standard, as detailed in the Journal of the Rubber Industry of Japan, Volume 46, Pages 53 to 61 (1973).

Silicone rubber moldings can be fabricated from the composition by introducing the composition into a continuous extrusion mold to form an uncured silicone rubber molding, and subjecting the uncured silicone rubber molding to cure at ambient pressure in a hot gas of 200 to 600 °C, preferably 200 to 500 °C, to produce the silicone rubber molding. The extrusion mold can be any extrusion mold used for extrusion molding of silicone rubber compositions such as single-screw extrusion molds.

The composition has a high cure rate upon heating, and it cures to provide transparent or semi-transparent silicone rubber moldings that are free of bubbles or contain bubbles to a limited extent. It also has a low surface tack. The composition is useful in applications where these properties are important, such as extrusion molding stock for tubes, tapes, sheet, coatings for electric wire and cable, and construction and architectural gaskets.

### EXAMPLES

The following examples set forth the invention in more detail, including Working Examples to show the extrusion-grade silicone rubber composition and method of fabricating moldings. Parts used in the Examples denotes weight parts. The following methods are used to measure curing characteristics and evaluate silicone rubber moldings for bubbles.

### Curing Characteristics

A small piece of silicone rubber composition is placed on the lower die of a JSR Model III Curastometer. Heat and shearing oscillation at an amplitude angle of 3° are applied, and the viscoelastic stress, i.e., the torque value, accompanying curing is measured. Two values are determined from a curing curve measured at 130 °C/10 minutes, one value is the time required to reach 10 percent of the maximum torque value achieved during curing designated T₁₀, and the other is the time required to reach 90 percent of the maximum torque value achieved during curing designated T₉₀.

### Presence or Absence of Bubbles

The silicone rubber molding is sectioned and the cut surface is evaluated for presence of bubbles.

### Example 1

The following components were introduced into a kneader mixer and mixed to homogeneity at 170 °C to provide a silicone rubber base compound: (i) 100 parts of a dimethylvinylsiloxy-endblocked methylvinylpolysiloxane gum with a degree of polymerization of 5,000 and having 99.86 mole percent of dimethylsiloxane units and 0.14 mole percent of methylvinylsiloxane units, (ii) 50 parts of dry-process silica with a BET specific surface area of 200 m²/g, and (iii) 7.0 parts of silanol-endblocked dimethylsiloxane oligomer with a viscosity at 25 °C of 60 centistoke(mm²/s). After the silicone rubber base compound had been cooled, an extrusion-grade silicone rubber composition was prepared by milling a paste of 1.0 part of a dimethylpolysiloxane oil mixed with 1.0 part of an organoperoxide with the structure: 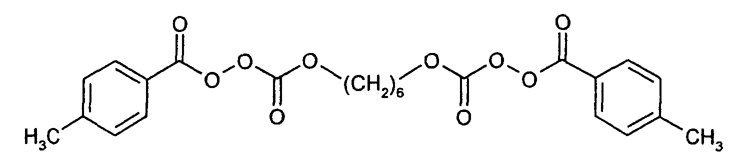 into each 100 parts of the silicone rubber base compound on a two-roll mill. The organoperoxide had a particle size analysis showing a maximum particle diameter of 50 µm and an average particle diameter of 20 µm. The silicone rubber composition was measured to determine its curing characteristics.

The extrusion-grade silicone rubber composition was introduced into a single-screw extruder with a diameter of 65 mm and extruded to provide a tube. Curing by heating for 5 minutes in a 230 °C oven provided a silicone rubber sponge tube. The silicone rubber sponge tube was transparent. The sectioned surface of the rubber was evaluated for bubble production. The measurement results are shown in Table 1.

The extrusion-grade silicone rubber composition was also introduced into a single-screw extruder with a diameter of 65 mm and coated in a crosshead on a copper core wire with a diameter of 1.0 mm, to provide a coating thickness of 0.5 mm. Curing was carried out during a 10 second traverse in a 7.2 m long convection oven at 500 °C, and the product was a silicone rubber-coated electric wire. To conduct bubble evaluation, the core wire was pulled out of the silicone rubber-coated wire and the cut surface of the rubber was inspected for the presence of bubbles. The results of the measurements are shown in Table 1.

### Example 2

The following components were introduced into a kneader mixer and mixed to homogeneity at 170 °C to provide a silicone rubber base compound: (i) 100 parts of a dimethylvinylsiloxy-endblocked methylvinyldiorganopolysiloxane gum with a degree of polymerization of 5,000, and having 99.86 mole percent of dimethylsiloxane units and 0.14 mole percent of methylvinylsiloxane units, (ii) 25 parts of dry-process silica with a BET specific surface area of 200 m²/g, and (iii) 4.0 parts of a silanol-endblocked dimethylsiloxane oligomer with a viscosity at 25 °C of 60 centistoke(mm²/s). A silicone rubber composition was prepared by milling a paste of 1.0 part of a dimethylpolysiloxane oil mixed with 1.0 part of an organoperoxide with the structure: 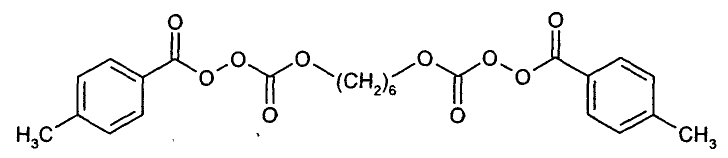 into each 100 parts of the silicone rubber base compound on a two-roll mill. The organoperoxide had a particle size analysis showing a maximum particle diameter of 50 µm and an average particle diameter of 20 µm. The silicone rubber composition was measured to determine its curing characteristics.

The extrusion-grade silicone rubber composition was introduced into a single-screw extruder with a diameter of 65 mm and extruded to provide a tube. Curing by heating for 5 minutes in a 230 °C oven provided a transparent silicone rubber tube. The sectioned surface of the rubber was evaluated for bubble production. The measurement results are shown in Table 1.

The extrusion-grade silicone rubber composition was also introduced into a single-screw extruder with a diameter of 65 mm and coated in a crosshead on a copper core wire with a diameter of 1.0 mm providing a coating thickness of 0.5 mm. Curing was achieved by 10 second traverse in a 7.2 m long convection oven at 500 °C, and the product was a silicone rubber-coated electric wire. To carry out bubble evaluation, the core wire was pulled out of the silicone rubber-coated wire and the cut surface of the rubber was inspected for the presence of bubbles. The results of the measurements are shown in Table 1.

### Comparative Example 1

An extrusion-grade silicone rubber composition was produced as in Example 1, but in this comparative example, bis(m-methylbenzoyl)peroxide was used in place of the organoperoxide in Example 1. The bis(m-methylbenzoyl)peroxide had a particle size analysis showing a maximum particle diameter of 50 µm and an average particle diameter of 20 µm. The characteristics of the extrusion-grade silicone rubber composition were measured as in Example 1, and the results are shown in Table 1.

### Comparative Example 2

An extrusion-grade silicone rubber composition was prepared as in Example 1, but in this comparative example, bis(p-methylbenzoyl)peroxide was used in place of the organoperoxide in Example 1. The bis(p-methylbenzoyl)peroxide had a particle size analysis showing a maximum particle diameter of 50 µm and an average particle diameter of 20 µm. The characteristics of the extrusion-grade silicone rubber composition were measured as in Example 1, and the results are shown in Table 1.

**Table 1.**

| | Example 1 | Example 2 | Comparative Example 1 | Comparative Example 2 |
|---|---|---|---|---|
| curing characteristics | | | | |
| T₁₀ | 0.21 | 0.22 | 0.28 | 0.29 |
| T₉₀ | 0.48 | 0.54 | 0.85 | 0.87 |

| presence/absence of bubbles | | | | |
|---|---|---|---|---|
| tube | absent | absent | present | present |
| wire coating layer | absent | absent | present | present |

Table 1 shows that the silicone rubber composition containing Components (A) and (B) including a special type of organoperoxide (B) curing agent has a high cure rate, and provides silicone rubber extrusion moldings that post-cure and are free of bubbles or contain bubbles to a limited extent.

## Claims

1. A silicone rubber composition for extrusion molding comprising
(A) 100 weight parts of a silicone rubber base compound containing
(a-1) 100 weight parts of a diorganopolysiloxane gum,
(a-2) 15 to 150 weight parts of reinforcing silica, and
(a-3) 1 to 20 weight parts of a silanol-endblocked organosiloxane oligomer or hexaorganodisilazane, and
(B) 0.1 to 10 weight parts of an organoperoxide having the formula
R - COOOCOO - R¹ - OOCOOOC - R
where R is an alkyl group, an alkoxy group, the group -SiR²₃, the group -CH₂SiR²₃, or the group -Ph-R³_{c} where R² is an alkyl or an alkoxy group, Ph is phenylene, R³ is an alkyl group, an alkoxy group, the group -SiR²₃, or the group -CH₂SiR²₃, **c** is 0 to 3, and R¹ is a C₁ to C₁₀ alkylene group.

2. The composition according to Claim 1 in which component (A) is an alkenyl-functional diorganopolysiloxane.

3. The composition according to Claim 2 in which the alkenyl-functional diorganopolysiloxane is a dimethylvinylsiloxy-endblocked dimethylsiloxane-methylvinylsiloxane copolymer.

4. The composition according to Claim 2 or 3, in which the alkenyl group in the alkenyl-functional diorganopolysiloxane is vinyl, and the content of vinyl is 0.01 to 0.4 mole percent.

5. The composition according to any of Claims 1 to 4, in which component (B) is in particulate form with a maximum particle size no greater than 50 *µ*m.

6. The composition according to any of Claims 1 to 5, in which component (B) is a paste in which component (B) is dispersed in a dimethylpolysiloxane oil.

7. The composition according to any of Claims 1 to 6, in which component (A) is prepared by mixing components (a-1), (a-2), and (a-3) at 150 to 220°C.

8. The composition according to any of Claims 1 to 7, in which the composition has properties in which the time (T₁₀) required for torque measured at 130 °C/10 minutes to reach 10 percent of maximum torque is less than or equal to 0.25 minute, and the time (T₉₀) required for torque measured at 130 °C/10 minutes to reach 90 percent of maximum torque is less than or equal to 1.0 minute, the measurements being carried with a JSR Model III Curastometer.

9. A tubular article obtained by extrusion molding the composition according to any of Claims 1 to 8.

10. The article according to Claim 9 which is transparent or semi-transparent.

11. A method of making silicone rubber extrusion moldings comprising feeding the composition according to any of Claims 1 to 8, to an extrusion mold, forming an uncured silicone rubber molding, and forming a finished silicone rubber molding by curing the uncured silicone rubber molding at ambient pressure in a hot gas at 200 to 600°C.
